# EUROPEAN PATENT APPLICATION

(11) **EP 4 814 782 A1**
(43) Date of publication of application: **30.09.2026**
(21) Application number: 24893462.2
(22) Date of filing: 20.11.2024
(51) Int. Cl.: G06F 40/177

(54) **TABLE FIELD CONTENT GENERATION METHOD AND APPARATUS, ELECTRONIC DEVICE**

(30) Priority: 21.11.2023 CN 202311560889
(71) Applicant: Beijing Zitiao Network Technology Co., Ltd., Beijing 100190 (CN)
(72) Inventor: GUAN, Andi, Beijing 100028 (CN); LIAO, Haochun, Beijing 100028 (CN); CHEN, Qinghong, Beijing 100028 (CN)
(74) Representative: Isarpatent
(86) International application number: PCT/CN2024/133209
(87) International publication number: WO 2025/108305

(57) **Abstract**

Embodiments of the present disclosure provide a table field content generation method and apparatus, and an electronic device. The method comprises: receiving prompt information input for a target field in a table, wherein the prompt information comprises at least one reference field, and the reference field is a field in the table; in response to receiving a content generation instruction for the target field, generating, on the basis of first content of a first cell corresponding to the reference field, second content of a second cell corresponding to the target field; and presenting the second content in the second cell corresponding to the target field. The operation of generating form field content is simplified, and content errors caused by misoperation are reduced.

## Description

The present application claims priority of the Chinese Patent Application No. 202311560889.4, filed on November 21, 2023, the disclosure of which is incorporated by reference herein in its entirety as part of the present application.

### TECHNICAL FIELD

Embodiments of the present disclosure relate to a method and an apparatus for generating table field content, and an electronic device.

### BACKGROUND

Tables are an important tool for collecting information, they can be used for recording various types of data, and the tables containing data can facilitate communication and data management among users within a certain group. Typically, the data in tables is manually input by users.

### SUMMARY

Embodiments of the present disclosure provide a method and an apparatus for generating table field content, and an electronic device.

In a first aspect, the embodiments of the present disclosure provide a method for generating table field content, and the method includes: receiving prompt information input for a target field in a table, where the prompt information includes at least one reference field, and the reference field is a field in the table; generating, in response to receiving a content generation instruction for the target field, second content of a second cell corresponding to the target field based on first content of a first cell corresponding to the reference field; and presenting the second content in the second cell corresponding to the target field.

In a second aspect, the embodiments of the present disclosure provide an apparatus for generating table field content, and the apparatus includes: a receiving unit, configured to receive prompt information input for a target field in a table, where the prompt information includes at least one reference field, and the reference field is a field in the table; a first generation unit, configured to generate, in response to receiving a content generation instruction for the target field, second content of a second cell corresponding to the target field based on first content of a first cell corresponding to the reference field; and a display unit, configured to present the second content in the second cell corresponding to the target field.

In a third aspect, the embodiments of the present disclosure provide an electronic device including a processor and a memory; the memory is configured to store computer-executable instructions; and the processor is configured to execute the computer-executable instructions stored in the memory, to implement the method for generating table field content according to the first aspect or various possible designs of the first aspect.

In a fourth aspect, the embodiments of the present disclosure provide a non-transitory computer-readable storage medium storing computer-executable instructions, and the computer-executable instructions, when executed by a processor, cause the processor to implement the method for generating table field content according to the first aspect or various possible designs of the first aspect.

In a fifth aspect, the embodiments of the present disclosure provide a computer program product including a computer program, and the computer program, when executed by a processor, implements the method for generating table field content according to the first aspect or various possible designs of the first aspect.

### BRIEF DESCRIPTION OF DRAWINGS

In order to more clearly illustrate the technical solutions in the embodiments of the present disclosure, the drawings to be used in the description of the embodiments will be briefly described below. Obviously, the drawings in the following description are only some embodiments in the present disclosure. For those ordinarily skilled in the art, other drawings may be obtained based on these drawings without inventive work.
Fig. 1 is a schematic flowchart 1 of a method for generating table field content provided by the present disclosure;
Fig. 2 is a schematic flowchart 2 of a method for generating table field content provided by the present disclosure;
Fig. 3 is a schematic flowchart 3 of a method for generating table field content provided by the present disclosure;
Fig. 4 is a schematic diagram of an application scenario;
Fig. 5 is a schematic diagram of an application scenario;
Fig. 6 is a schematic diagram of an application scenario;
Fig. 7 is a schematic diagram of an application scenario;
Fig. 8 is a schematic diagram of an application scenario;
Fig. 9 is a schematic structural diagram of an apparatus for generating table field content provided by the present disclosure; and
Fig. 10 is a schematic structural diagram of hardware of an electronic device provided by the present disclosure.

### DETAILED DESCRIPTION

In order to make objects, technical details and advantages of the embodiments of the present disclosure apparent, the technical solutions of the embodiments will be described in a clearly and fully understandable way in connection with the drawings related to the embodiments of the disclosure. Apparently, the described embodiments are just a part but not all of the embodiments of the present disclosure. Based on the described embodiments herein, those ordinarily skilled in the art can obtain other embodiment(s), without any inventive work, which should be within the scope of the present disclosure.

Individual users and group users can usually use tables to record various data for data searching, or to analyze and process the data recorded in the tables to guide subsequent service.

Currently, the data in the tables is usually input manually. For some fields with content obtained by content analysis of other fields, the content of these fields is usually still required to be input after manual analysis, or after rules are set manually, the rules are applied to each cell individually to obtain the content of these fields.

In the above-mentioned process, on one hand, the content of a table field (represented as follows: table field content) needs to be generated by manual operation, which is inefficient; and on the other hand, because the generation of table content requires manual operation, errors may easily occur due to misoperations.

The present disclosure provides a method and an apparatus for generating table field content; prompt information is set for a target field, and the prompt information includes a reference field; when a content generation instruction for the target field is received, the content of a cell corresponding to the target field is generated according to the content of the cell of the reference field in the prompt information; in this case, the user does not need to manually input or manually generate the content corresponding to the target field in each cell, therefore, on one hand, the operation of generating the table field content can be simplified; and on the other hand, errors caused by misoperations can be reduced.

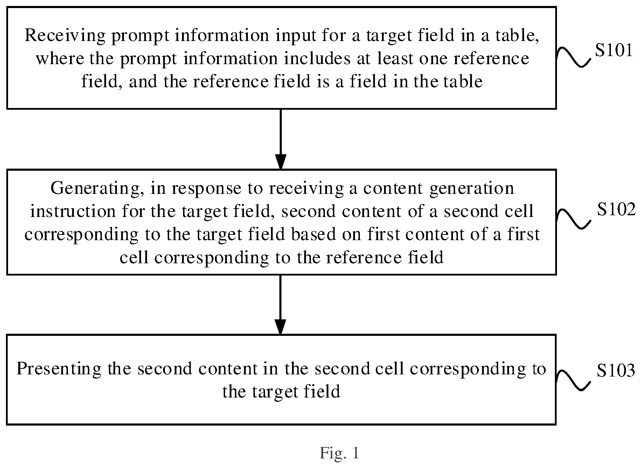

With reference to Fig. 1, Fig. 1 is a schematic flowchart 1 of a method for generating table field content provided by the embodiments of the present disclosure. As shown in Fig. 1, the method includes the following steps.

S101: receiving prompt information input for a target field in a table, where the prompt information includes at least one reference field, and the reference field is a field in the table.

In this embodiment, an execution body of the method for generating table field content may be a client running in a terminal device, or a server. The client herein is any application client or webpage client capable of editing tables. The terminal device herein may include a mobile terminal device or a fixed terminal device.

A client interface can display a table, and a user can execute a first preset configuration operation on the target field in the displayed table to automatically generate attribute configuration for the content of the target field.

The above-mentioned target field may be a newly field or an existing field.

The above-mentioned prompt information may be input by a user or an electronic device. That is, the prompt information can be set by the user or input by the electronic device based on an instruction.

The above-mentioned prompt information includes at least one reference field used for generating the content of the cell corresponding to the target field, and further includes, but is not limited to, one or more of the following items: task information, information of algorithms or rules for processing the reference field, and the like.

In some application scenarios, the user can input the prompt information of the target field in an attribute setting interface of the table. And after the prompt information is received, the prompt information can be associated with the target field.

S102: generating, in response to receiving a content generation instruction for the target field, second content of a second cell corresponding to the target field based on first content of a first cell corresponding to the reference field.

The above-mentioned content generation instruction for the target field may be an instruction sent by a user or an instruction generated by an electronic device.

After the content generation instruction for the target field is received, the execution body can generate the second content of the second cell of the target field according to the first content of the first cell corresponding to the reference field.

Illustratively, the above-mentioned table is a student achievement table. The first field in the student achievement table is the student mark, and scores of a plurality of students are recorded in a plurality of first cells corresponding to the first field. The target field is an achievement grade field. The prompt information may include task information and the reference field. The task information includes that: achievements are classified according to the scores, the reference field is the first field, and the execution body can generate content (grade) corresponding to the second cell corresponding to the target field according to the score in each first cell in the first field. For example, if the score (first content) in one first cell is 95, the second content of the second cell corresponding to the first cell is "grade I". If the score in another first cell is 90, the second content of the second cell corresponding to the first cell is "grade II"; and if the score in another first cell is 89, the second content of the second cell corresponding to the first cell is "grade III"

S103: presenting the second content in the second cell corresponding to the target field.

After the second content of the second cell corresponding to the target field is obtained, the second content can be presented in the second cell of the target field. Specifically, for each second cell, the second content corresponding to the second cell is presented.

In the embodiments of the present disclosure, the method includes: receiving prompt information input for a target field in a table, where the prompt information includes at least one reference field, and the reference field is a field in the table; generating, in response to receiving a content generation instruction for the target field, second content of a second cell corresponding to the target field based on first content of a first cell corresponding to the reference field; and presenting the second content in the second cell corresponding to the target field. Therefore, when the content generation instruction for the target field is received, the content of the cell corresponding to the target field is generated according to the content of the cell of the reference field in the prompt information, the user does not need to manually input or manually generate the content corresponding to the target field in each cell; Therefore, on one hand, the operation of generating the table field content can be simplified, and on the other hand, errors caused by misoperations can be reduced.

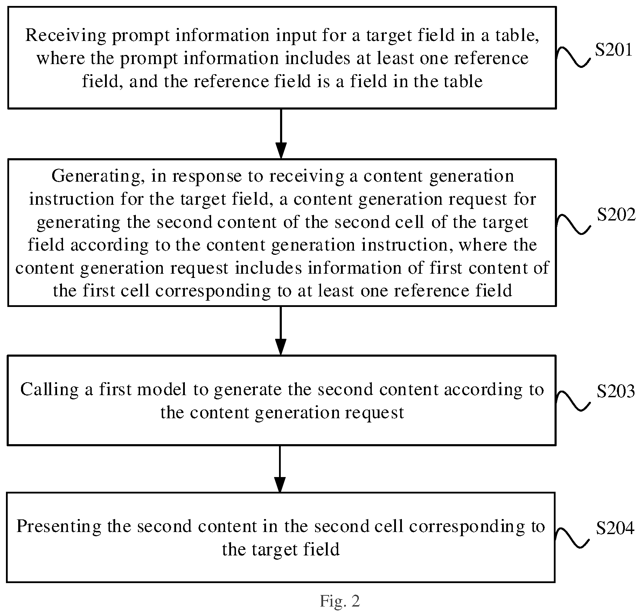

With reference to Fig. 2, Fig. 2 is a schematic flowchart 2 of a method for generating table field content provided by the embodiments of the present disclosure; as shown in Fig. 2, the method includes the following steps.

S201: receiving prompt information input for a target field in a table, where the prompt information includes at least one reference field, and the reference field is a field in the table.

The specific implementation of step S201 can refer to the description of step S101 as shown in Fig. 1, which will not be repeated herein.

In this embodiment, the execution body of the method for generating table field content may be a client running in the terminal device or a server.

The above-mentioned prompt information includes at least one reference field used for generating the content of the cell corresponding to the target field, and further includes, but is not limited to, one or more of the following items: task information, information of algorithms or rules for processing the reference field, output format information, and the like.

S202: generating, in response to receiving a content generation instruction for the target field, a content generation request for generating the second content of the second cell of the target field according to the content generation instruction, where the content generation request includes information of first content of the first cell corresponding to at least one reference field.

When the content generation instruction is received, the prompt information corresponding to the target field can be extracted, and the content generation request is generated according to the prompt information.

In the table, the field generally corresponds to a column of cells, that is, a field corresponds to a plurality of cells.

The cell corresponding to each reference field is regarded as the first cell. The existing content in the first cell is regarded as the first content. The cell corresponding to the target field is regarded as the second cell, and the second cell corresponds to the second content. The second content can be the content to be generated.

In some application scenarios, the types of target fields may include text, single-choice, multiple-choice, date, and number. The types of reference fields may include, but are not limited to, multi-line text, single-choice, multiple-choice, date, number, checkbox, hyperlink, formula (result value), search reference (result value), progress, currency, score, association (result value), creation time, final update time, and the like.

The prompt information includes, but is not limited to, task information, information of resources for generating the content of the cell corresponding to the target field, information of algorithms or rules for processing the resources, output format information, and the like.

The information of the first content may include the first content of the corresponding first cell, or acquisition location information of the first content of the first cell.

The content generation request can be generated according to the first content of the first cell of at least one reference field.

S203: calling a first model to generate the second content according to the content generation request.

S204: presenting the second content in the second cell corresponding to the target field.

The first model can be called by a preset interface, the content generation request corresponding to the second cell of the target field is sent to the first model, and the first model processes first content of the first cell of the reference field according to the content generation request, to generate the second content of the second cell of the corresponding target field.

The above-mentioned first model may be a deep neural network with a large number of parameters, for example, it may be a Large Language Model (LLM). The first model may be a model that is pre-trained using a large amount of training data and has preliminary reasoning capability.

In some embodiments, step S202 includes: generating content generation requests respectively corresponding to a plurality of second cells corresponding to the target field, where a content generation request of each second cell includes the first content of the corresponding first cell; and step S203 includes: sending the content generation requests respectively corresponding to the plurality of second cells to the first model, and generating the second content corresponding to each second cell by the first model.

In these embodiments, for each second cell corresponding to the target field, the above-mentioned execution body generates the content generation request of the second cell according to the prompt information. The content generation request of the second cell includes information of the first content of the first cell corresponding to the reference field. For each second cell corresponding to the target field, the above-mentioned execution body can send a content generation request corresponding to the second cell to the first model through the preset interface.

Taking the reference field being a landscape description field as an example, each first cell in the reference field records the landscape of a city. The target field is a city field and corresponds to a plurality of second cells. The task indicated in the prompt information is to extract a city name from the reference field. For the Nth second cell in the target field, the first content in the Nth first cell of the reference field can be written into the content generation request corresponding to the Nth second cell; and the content generation request corresponding to the Nth second cell is sent to the first model, and the first model extracts a target city from the first content of the Nth first cell according to the task information in the content generation request. The first model returns the extracted target city to the execution body, accompanied by the information of the Nth second cell. The execution body writes the target city into the Nth second cell of the target field.

In some embodiments, the sending the content generation requests respectively corresponding to the plurality of second cells to the first model, and generating the second content corresponding to each second cell by the first model includes:

sending the content generation requests respectively corresponding to the plurality of second cells to the first model in parallel, and generating the second content corresponding to each second cell by the first model in parallel based on the content generation requests.

Taking the reference field including a reference field 1 and a reference field 2 as an example, the first content is recorded in each first cell of the reference field 1 and each first cell of the reference field 2. The first content may be text content. The target field may be a summary field. The above-mentioned prompt information includes information of the reference field 1 and the reference field 2. When the content generation instruction for the target field is received, the content generation request corresponding to each second cell of the target field can be generated. The content generation request corresponding to each second cell includes text content in the first cell corresponding to the reference field 1 corresponding to the second cell, and text content in the first cell corresponding to the reference field 2 corresponding to the second cell. The content generation request indicates the first model to generate the summary content according to the first content in the first cells corresponding to the reference field 1 and the reference field 2.

The content generation requests respectively corresponding to respective second cells are sent to the first model in parallel. The first model summarizes the text content in the first cell corresponding to the reference field 1 and the text content in the first cell corresponding to the reference field 2 in the content generation request according to each content generation request in parallel, to obtain the second content of the second cell corresponding to the content generation request. The first model returns the second content of each second cell to the execution body, and the execution body writes the second content into each second cell and presents the second content.

Taking the target field S1 being weather as an example, the reference field S2 is a city field. One city name is recorded in each of the plurality of cells of the reference field. The first cell 1 of the reference field S2 records a city 1, the first cell 2 records a city 2, ..., and the first cell K records a city K. After the content generation instruction for the target field S1 is received, the content generation requests respectively corresponding to the second cell 1, the second cell 2, ..., the second cell K of the target field S1 can be generated according to the prompt information. Illustratively, for the second cell 1, the content generation request includes a task of generating current weather information of the city, and the content of the first cell 1 of the reference field S2 is "city 1". The content generation requests corresponding to the plurality of second cells can be sent to the first model in parallel. The first model processes the plurality of content generation requests in parallel to obtain second content of the plurality of second cells, and writes the second content into the corresponding second cells. Taking the second cell 1 as an example, the first content of the first cell of the reference field is "city 1". The first model generates the current weather information of the city 1 according to the first content "city 1" in the first cell 1 and the task "generate current weather information of the city". The first model can return the carried information of the second cell 1 and the current weather information to the execution body. The execution body writes the current weather information into the second cell 1 of the target field.

Compared with the embodiment shown in Fig. 1, in this embodiment, the first model processes the content generation request including the first content of the first cells to obtain the second content of the second cells of the target field, thus the content of the target field of the table can be automatically generated by the first model according to the content generation request. The efficiency of generating the field content is further improved.

In some embodiments, the method further includes the following step:

first, in response to receiving a content update instruction for the target field, regenerating the content generation requests of the plurality of second cells corresponding to the target field, and calling the first model to process regenerated content generation requests to generate first updated content of the plurality of second cells.

In the embodiments, after the second content of the second cells corresponding to the target field is generated, the second content of the second cells corresponding to the target field can be updated. The content update instruction for the target field can be sent to the execution body, and after receiving the content update instruction, the execution body can regenerate the content generation requests corresponding to the plurality of second cells corresponding to the target field. The first model is called through the preset interface to process the regenerated content generation requests, to generate the first updated content of the plurality of second cells of the target field.

Second, updating the second content of the second cells with the first updated content.

Specifically, the description of related parts in steps S202-S203 can be referred to, and details are not repeated here.

In the embodiments, the second content of the target field is updated through the content update instruction for the target field, and therefore updating of the content of the target field is achieved.

In some embodiments, the content update instruction is generated based on one of the following modes:
generating the content update instruction according to a received field content update operation executed by a user on the target field; and
generating the content update instruction in response to meeting an automatic update condition, where the automatic update condition includes one of: timing triggering, adding a new record to the table, changing table recorded content, and reaching a time indicated by a specified record.

In some application scenarios, a content update control used for manually updating the content can be displayed near the title of the target field. The user can execute a trigger operation on the content update control. After the trigger operation executed by the user on the content update control is received, the content update instruction can be generated.

In some application scenarios, the automatic update condition can be set, and after the automatic update condition is met, the content update instruction can be generated.

The automatic update condition includes timing triggering. The timing triggering includes triggering content updating of the target field once every preset time interval. The preset time interval may be 24 hours, or the like.

The automatic update condition may also include adding a new record in the table. When the new record is added in the table, the automatic updating of the target field content can be triggered, so that the target field content conforms to the content after the new record is added in the table.

The automatic update condition may also include changing the table recorded content. When the table recorded content is changed, in order to make the target field content to be consistent with content recorded in the table with the changed content, it is need to update the content of the target field.

The automatic update condition may also include reaching the time indicated by a specified record. The specified record may be one record in the table. The specified record can record an update time. When the update time indicated by the specified record is reached, the content of the target field can be updated.

In the embodiments, the content of the target field can be manually updated, or updated when meeting the automatic update condition, and the content of the target field can be updated in different ways.

In some embodiments, the method further includes the following steps:
first, in response to receiving a content update instruction for a target second cell of the target field, regenerating a content generation request of the target second cell, and calling the first model to generate second updated content of the target cell according to the regenerated content generation request corresponding to the target second cell; and
second, updating second content of the target second cell with the second updated content.

In the embodiments, the content of a single second cell in the target field can be updated. Specifically, the user can send the content update instruction of the target second cell to the execution body. The execution body regenerates the content generation request of the target second cell, and the first model is called to generate the second updated content of the target second cell according to the regenerated content generation request of the target second cell.

In the embodiments, the content generation request of the target second cell is generated with the content update instruction for the target second cell of the target field, and the first model generates the second updated content of the target second cell, thus realizing content updating of the single cell of the target field. Therefore, the updated content of the target second cell can be quickly obtained.

In some embodiments, the content update instruction for the target second cell of the target field is generated based on the following steps:
first, displaying, in response to detecting a first preset operation executed by a user on the target second cell, a content update option corresponding to the target second cell; and
second, generating, in response to receiving a trigger operation executed on the content update option, the content update instruction corresponding to the target second cell.

The first preset operation herein may be, for example, cursor hovering, or the duration of a touch operation of the user on the target second cell being longer than a preset duration.

When it is received that the first preset operation is executed by the user on the target second cell, it is regarded as that the execution body receives the content update instruction for the target second cell and then executes the content update operation on the target second cell.

In the embodiments, the first preset operation is executed on the target second cell to realize the content updating for the target second cell, which facilitates the user to update the content of the cells.

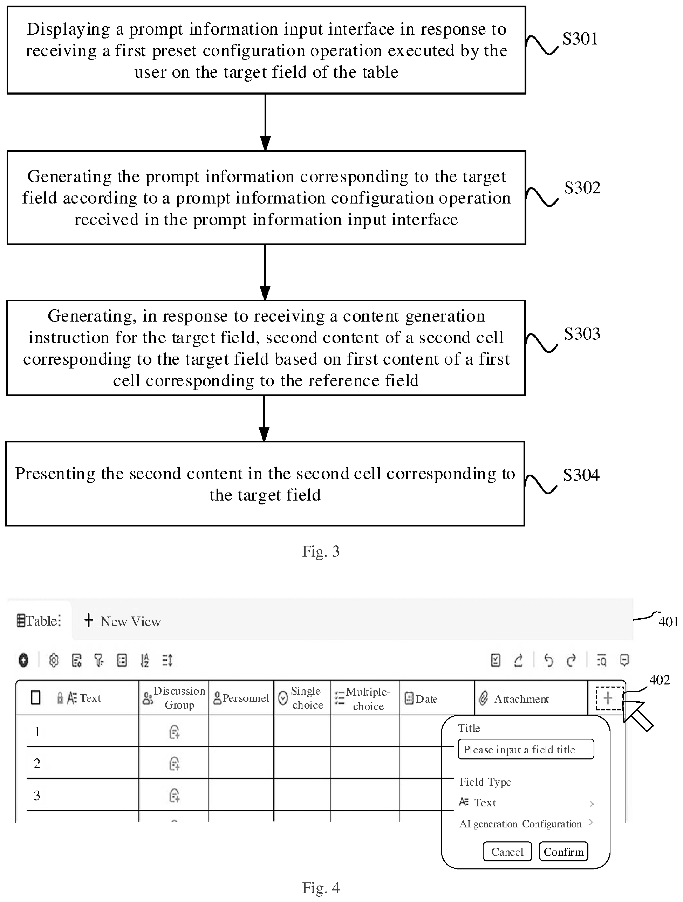

With reference to Fig. 3, which is a schematic flowchart 3 of a method for generating table field content provided by the present disclosure. As shown in Fig. 3, the method includes the following steps.

S301: displaying a prompt information input interface in response to receiving a first preset configuration operation executed by the user on the target field of the table.

In this embodiment, the execution body of the method for generating table field content may be a client or a server. The client herein is an application client or a webpage client allowing random table editing.

The table can be displayed on the client interface, and the user can execute a first preset configuration operation on the target field in the displayed table interface.

In some embodiments, the target field may be a new field or an existing field.

In some application scenarios, the target field may be a new field. In these application scenarios, step S301 includes the following steps:
receiving a trigger operation executed for a prompt information configuration entry displayed on a creation page of the new field, and displaying the prompt information input interface.

With reference to Fig. 4, Fig. 4 is a schematic diagram of an application scenario. As shown in Fig. 4, the user can create a new field in the table interface 401. For example, an addition control 402 used for indicating to add a new field is displayed on the table interface 401. The addition control 402 can display the position to randomly indicate to add characters, graphs and/or symbols and the like of the new field in the table, as shown in Fig. 4, the addition control 402 is displayed as a symbol "+".

The user can execute a trigger operation on the addition control 402, to display a creation page, and the creation page is used for creating a new field. A title input region can be displayed on the creation page for inputting a field title. The user can input the title of a field in the title input region. Attribute configuration and prompt information configuration can further be displayed on the creation page, and the attribute configuration may include field type configuration. The prompt information configuration may have various display identifiers, such as "AI generation" shown in Fig. 4. The prompt information configuration includes a prompt information configuration entry, such as "configuration" in Fig. 4. The user can execute a trigger operation on the prompt information configuration entry on the interface, to enter the prompt information input interface.

In the embodiments, content automatic generation attribute can be configured for a new field to enable the configuration of content automatic generation attribute at the time of field creation.

In some embodiments, the target field is an existing field, and step S301 includes the following steps:
first, displaying a field editing option according to a second preset operation executed for the existing field;
second, receiving a selection operation executed on the field editing option, and displaying a content automatic generation attribute configuration entry; and
finally, receiving a trigger operation executed on the content automatic generation attribute configuration entry, and displaying the prompt information input interface.

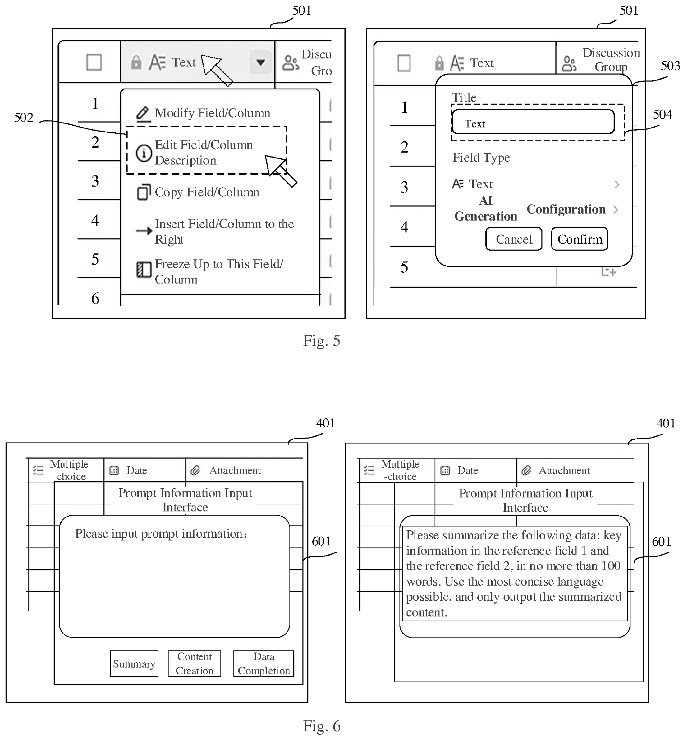

With reference to Fig. 5, Fig. 5 is a schematic diagram of an application scenario. As shown in Fig. 5, there are some existing fields in the table, for example, the existing fields "text" and "discussion group" displayed on the interface 501. The user can execute a second preset operation on the existing field (target field) "text". The second preset operation herein may be any operation triggered to display the field editing interface, such as a right click operation, or a touch operation with a preset duration.

After the second preset operation is received, a field editing option 502 can be displayed. The user can execute a trigger operation on the field editing option, and then a field configuration interface 503 is displayed. A title modification window 504 corresponding to the target field and the prompt information configuration can be displayed on the field configuration interface 503, and the prompt information configuration may have various display identifiers, such as "AI generation" in Fig. 5. The prompt information configuration includes the prompt information configuration entry, such as "configuration" in Fig. 5. The user can execute a trigger operation on the prompt information configuration entry in the interface, to enter the prompt information input interface.

S302: generating the prompt information corresponding to the target field according to a prompt information configuration operation received in the prompt information input interface.

The prompt information configuration operation can be executed in the displayed prompt information input interface. In some application scenarios, the user can input the prompt information in the prompt information input interface. In some other application scenarios, the prompt information can be input in the prompt information input interface by the electronic device. Inputting by the user is taken as an example for description below.

The user can execute the prompt information configuration operation in the prompt information input interface, and the prompt information includes task information, information of at least one reference field, information of algorithms or rules for processing the content of the reference field, output format information, and the like.

In some embodiments, step S302 includes:
using third content input in the prompt information input interface as the prompt information of the target field; or
receiving fourth content input in a target prompt information template provided by the prompt information input interface, and generating the prompt information according to fifth content provided by the target prompt information template and the fourth content.

In some application scenarios, the user can input the third content in the prompt information input interface, and the execution body can take the third content input by the user as the prompt information. The third content includes text, formula, number, and the like.

With reference to Fig. 4 and Fig. 6, Fig. 6 is a schematic diagram of an application scenario. As shown in Fig. 4, when creating a new field on the table interface 401, prompt information configuration is performed on the new field. After executing a trigger operation on the prompt information configuration entry as shown in Fig. 4, a prompt information input interface 601 can be displayed. The user can input the third content in the prompt information input interface 601 according to input indication information "please input prompt information" of the prompt information, and the execution body takes the third content input by the user as the prompt information. For example, the third content is "Please summarize the following data: key information in the reference field 1 and the reference field 2, in no more than 100 words. Use the most concise language possible, and only output the summarized content", as shown in Fig. 6.

In the embodiments, the prompt information is generated according to the third content input by the user, so that user personalized setting of the prompt information can be realized, facilitating the user expression.

In some application scenarios, the target prompt information template can be displayed on the prompt information input interface, and the target prompt information template includes the user input region and a preset text region. At least one prompt information template can be displayed on the prompt information input interface. The target prompt information template may be one of the at least one prompt information template. For example, the target prompt information template is selected by the user from the at least one prompt information template.

The user input region includes input indication information. The input indication information includes indication information of the type of information to be input. The user can input the fourth content in the user input region. The target prompt message template can further include a preset fifth content. After the user finishes inputting the fourth content, the execution body can generate the prompt information according to the fifth content and the fourth content.

The fifth content may include the preset text content, formula and/or number, etc. The fourth content may include the text content, formula and/or number, etc., input by the user.

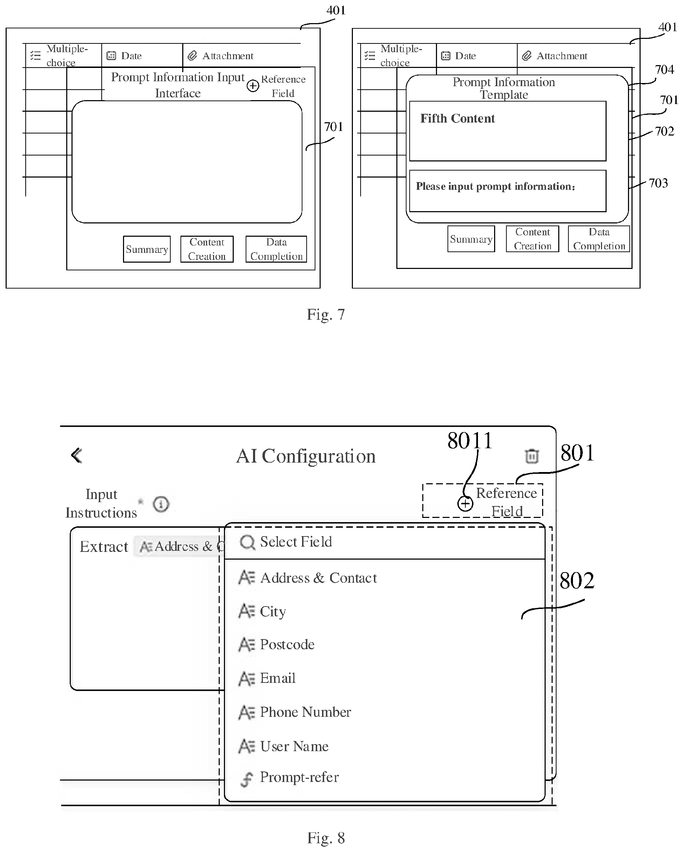

With reference to Fig. 4 and Fig. 7, Fig. 7 is a schematic diagram of an application scenario. As shown in Fig. 4, when creating a new field on the table interface 401, the prompt information configuration is performed on the new field. After a trigger operation is executed on the prompt information configuration entry as shown in Fig. 4, a prompt information input interface 701 for automatically generating content can be displayed. The prompt information input interface can display a prompt information template list, and the preset fifth content 702 and the user input region 703 can be displayed on the prompt information template interface 701. The user can input the fourth content in the user input region 703. The fifth content in Fig. 7 may be any preset content and includes the text, number and/or formula, etc. The input indication information "prompt information" can be displayed in the user input region 703. The user can input the fourth content in the user input region 703. The fourth content includes the text, number and/or formula, etc.

The execution body can generate the prompt information according to the fourth content input by the user and the preset fifth content in the prompt information template.

In the embodiments, the prompt information template is provided for the user, and the fifth content is preset in the prompt information template. The user inputs the fourth content in the user input region, and the prompt information is generated according to the fourth content and the fifth content. Therefore, the content input by the user can be reduced, and the prompt information can be quickly generated.

In some embodiments, the method further includes the following steps:
first, displaying a prompt information template list on the prompt information input interface, and displaying a target prompt information template content interface according to a selection operation executed by the user on the target prompt information template in the prompt information list, where the target prompt information template content interface includes the corresponding fifth content; and
second, hiding the prompt information template list in response to receiving a fourth content editing operation executed by the user on the target prompt information template content interface.

In the embodiments, the prompt information template list can be displayed to the user on the prompt information input interface. The prompt information template list includes at least one prompt information template. The at least one prompt information template may include prompt information templates corresponding to different application scenarios, for example, include a summary type prompt information template applied to a content summary scenario, a prompt information template applied to a content writing scenario, a prompt information template applied to a data generation scenario, a prompt information template applied to a data extraction scenario, and a prompt information template applied to a data analysis scenario.

The user can select one prompt information template according to the application scenario to edit the prompt information. The prompt information template selected by the user can be a target prompt information template. The target prompt information template can include the pre-configured fifth content.

With reference to Fig. 7, as shown in Fig. 7, the prompt information template list can be displayed on the prompt information input interface 701, and the prompt information template list includes a "summary" prompt information template, a "content creation" prompt information template, and a "data completion" prompt information template. According to specific application scenarios, the prompt information template list can also include different prompt information templates. The user can select the target prompt information template from the prompt information template list, and a target prompt information template content interface 704 is displayed.

The user can edit the fourth content in the user input region 703. After the fourth content edited by the user is received, the prompt information template list can be hidden. That is, the prompt information template list is not displayed anymore along with the fourth content input by the user.

Different prompt information templates are provided for the user to select on the prompt information input interface, so that the user can apply the corresponding prompt information templates in different scenarios, and the aim of quickly generating prompt information is fulfilled. In addition, after the user edits the fourth content in the target prompt information template, it can be regarded as that the user does not need the prompt information template list, the prompt information template list can be hidden, and the fifth content in the target prompt information template and the fifth content input later can be displayed for the user.

In some embodiments, when the target prompt information template is opened, a cursor can be automatically positioned to the user input region, so that the user can quickly input the fifth content in the prompt information input interface.

In some embodiments, the method further includes:
redisplaying the prompt information template list in response to detecting that the fourth content is completely deleted.

In these embodiments, the user can delete the fourth content input in the prompt information input interface. After the fourth content is completely deleted, the prompt information template list can be redisplayed by the execution body.

After the user completely deleted the edited fourth content, it can be regarded that the user needs to reselect the target prompt information template and input the fourth content into the reselected target prompt information template, and therefore, the user can conveniently reselect the target prompt information template by redisplaying the prompt information template list to reconfigure prompt information for the target field.

S303: generating, in response to receiving a content generation instruction for the target field, second content of a second cell corresponding to the target field based on first content of a first cell corresponding to the reference field.

S304: presenting the second content in the second cell corresponding to the target field.

The specific implementation of steps S303-S304 can refer to descriptions corresponding to steps S102-S103 in the embodiment as shown in Fig. 1 or steps S202-S204 in the embodiment as shown in Fig. 2, which will not be repeated here.

Compared with the embodiment as shown in Fig. 1, in this embodiment, it describes that the prompt information input interface is displayed according to the operation executed by the user on the target field; the prompt information corresponding to the target field is generated according to the received prompt information configuration operation executed on the prompt information input interface; and therefore, the user can conveniently configure the prompt information for the target field, which improves the efficiency of inputting the prompt information for the target field, and quickly achieves the generation of the content of the target field.

In some embodiments, a field reference control is displayed on the prompt information input interface; the field reference control is used for setting a reference field in the prompt information; and the method further includes the following steps:
first, displaying a reference field setting interface in response to receiving a trigger operation executed on the field reference control; and
second, setting, according to received reference field information input in the reference field setting interface, the reference field indicated by the reference field information for the prompt information.

The field reference control is displayed on the prompt information input interface.

A referenceable field list can be displayed on the reference field setting interface, and at least one field for selection can be displayed in the referenceable field list. The user can execute a selection operation in the referenceable field list to select a target reference field from the referenceable field list.

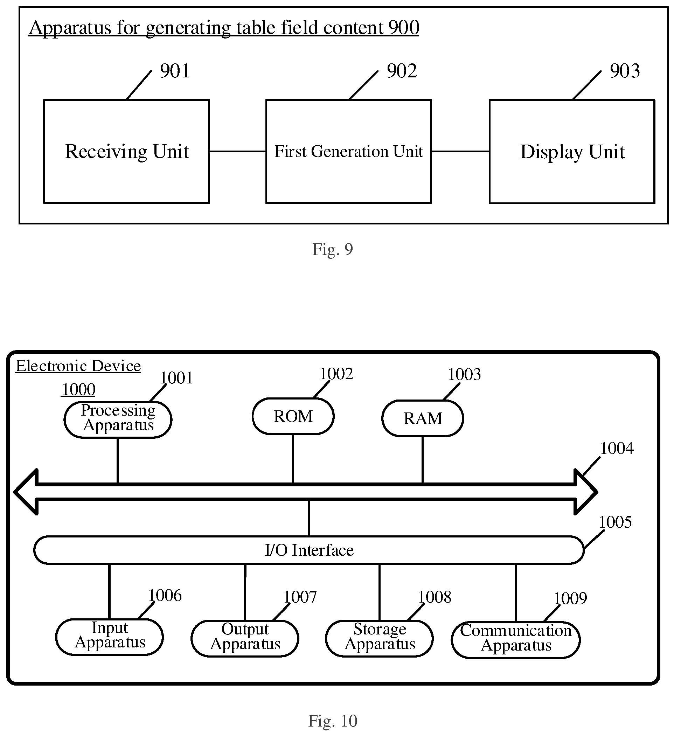

With reference to Fig. 8, Fig. 8 is a schematic diagram of an application scenario. As shown in Fig.9, the field reference control 801 is displayed on the prompt information input interface. The control has an identifier for indicating the control as the field reference control, and the identifier includes characters, letters and/or symbols, for example, the identifier of the field reference control displayed in Fig. 8 includes a symbol 8011 and a text "reference field". The user can execute a trigger operation on the field reference control 801. Then, a reference field setting interface 802 is displayed. A referenceable field list can be displayed on the reference field setting interface 802, and the referenceable field list includes a plurality of referenceable fields, for example, referenceable fields of "address & contact", "city", "postcode", "phone number", and "user name" as shown in Fig. 8. The user can select any field as the target reference field from the referenceable field list. The target reference field may include one or more reference fields. If the user selects the "address & contact" as the reference field in Fig. 8, the information of the reference field can be displayed in the prompt information.

The types of the referenceable fields include, but are not limited to, multi-line text, single-choice, multiple-choice, date, number, checkbox, hyperlink, formula (result value), search reference (result value), progress, currency, score, association (result value), creation time, final update time, and the like.

Further, the method further includes:
controlling the reference field setting interface to move along with the movement of a cursor.

The user can move the cursor on the prompt information input interface to select the content of the reference field for use; and because the reference field setting interface moves along with the movement of the cursor, on one hand, the user can know the position to which the cursor currently moves at any time, and on the other hand, the execution body can know the target content of the reference field to be used by the user in the prompt information input interface in real time.

In the embodiments, the field reference control is displayed on the prompt information input interface, and the reference field for generating the content of the target field is configured through the field reference control; therefore, reference field setting for the target field can be rapidly achieved.

In some embodiments, the method further includes:
displaying information of the target reference field in the prompt information after the target reference field is determined.

In the embodiments, after the target reference field referenced by the target field is determined, the information of the target reference field can be displayed in the prompt information. By displaying the information of the target reference field in the prompt information, the user can understand the reference field used by the target field.

In some embodiments, the method further includes displaying a preset label at a preset position of a target field title after the prompt information of the target field is received, where the preset label indicates that the content of the target field is generated according to the reference field in the first prompt information.

In some embodiments, the method further includes the following steps:
receiving an editing operation on other attributes of the target field, and in response to the editing operation meeting a preset condition, keeping the prompt information corresponding to the target field; or
in response to the editing operation not meeting the preset condition, deleting the prompt information corresponding to the target field.

The preset condition includes modifications to a field title, a format and cell data of the target field; and changing the type of the target field to the type supporting generation of field content according to the prompt information.

The field types supporting the generation of the field content according to the prompt information include text, single-choice, multiple-choice, date and number. That is, when the field type is the above-mentioned type, it supports the generation of the field content according to the prompt information. The prompt information can be set for the field of the above-mentioned type.

When the target field is edited, for example, the title, the format or the cell data of the target field is modified, the type of the target field is not changed, and therefore, the target field can still keep the prompt information after editing operation.

When the type of the target field is changed into another type, and if another type still supports the generation of content according to the prompt information, after the type is changed into another type, the target field still keeps the prompt information.

When the type of the target field is changed into the type not supporting the generation of field content according to the prompt information through the editing operation, the prompt information of the target field is deleted, and the target field does not have the prompt information any more.

In the embodiments, when an editing operation is performed on other attributes of the target field, if the editing operation meets the preset condition, the target field keeps the corresponding prompt information; and if the editing operation does not meet the preset condition, the prompt information of the target field is deleted, so that when the editing operation performed on the other attributes of the target field leads to that the target field does not support the generation of content according to the prompt information, the prompt information of the target field will be deleted, thereby avoiding data errors caused by that the content corresponding to the target field is still generated according to the prompt information when the target field does not support the generation of field content according to the prompt information.

In correspondence to the above-mentioned method for generating table field content according to the embodiment shown in Fig. 1, Fig. 9 is a schematic structural diagram of an apparatus for generating table field content provided by the embodiments of the present disclosure. For illustrative purposes, only those parts relevant to the embodiments of the present disclosure are shown. With reference to Fig. 9, the apparatus 90 includes a receiving unit 901, a first generation unit 902, and a display unit 903.

The receiving unit 901 is configured to receive prompt information input for a target field in a table, the prompt information includes at least one reference field, and the reference field is a field in the table.

The first generation unit 902 is configured to generate, in response to receiving a content generation instruction for the target field, second content of a second cell corresponding to the target field based on first content of a first cell corresponding to the reference field.

The display unit 903 is configured to present the second content in the second cell corresponding to the target field.

In some embodiments, the first generation unit 902 is further configured to:
generate a content generation request for generating the second content according to the content generation instruction, where the content generation request includes information of first content; and
call a first model to generate the second content according to the content generation request.

In some embodiments, the first generation unit 902 is further configured to:
generate content generation requests respectively corresponding to a plurality of second cells corresponding to the target field, where the content generation request of each second cell includes the first content of the corresponding first cell; and
call the first model to generate the second content according to the content generation request includes:
send the content generation requests respectively corresponding to the plurality of second cells to the first model, and generate the second content corresponding to each second cell by the first model.

In some embodiments, the first generation unit 902 is further configured to:
send the content generation requests respectively corresponding to the plurality of second cells to the first model in parallel, and generate the second content corresponding to each second cell by the first model in parallel based on the content generation requests.

In some embodiments, the apparatus 90 further includes a second generation unit (not shown in the figure), and the second generation unit is configured to:
in response to receiving a content update instruction for the target field, regenerate the content generation requests of the plurality of second cells corresponding to the target field, and call the first model to process regenerated content generation requests to generate first updated content of the plurality of second cells; and
update the second content corresponding to each second cell with the first updated content.

In some embodiments, the apparatus 90 further includes a first instruction generation unit (not shown in the figure), and the first instruction generation unit is configured to generate the content update instruction based on one of the following modes:
generating the content update instruction according to a received field content update operation executed by a user on the target field; and
generating the content update instruction in response to meeting an automatic update condition, where the automatic update condition includes one of: timing triggering, adding a new record to the table, changing table recorded content, and reaching the time indicated by a specified record.

In some embodiments, the apparatus 90 further includes a third generation unit (not shown in the figure), and the third generation unit is configured to:
in response to receiving a content update instruction for a target second cell of the target field, regenerate a content generation request of the target second cell, and call the first model to generate second updated content of the target cell according to the regenerated content generation request corresponding to the target second cell; and
update second content of the target second cell with the second updated content.

In some embodiments, the apparatus 90 further includes a second instruction generation unit (not shown in the figure), and the second instruction generation unit is configured to generate the content update instruction for a target second cell based on the following steps:
display, in response to detecting a first preset operation executed by a user on the target second cell, a content update option corresponding to the target second cell; and
generate, in response to receiving a trigger operation executed on the content update option, the content update instruction corresponding to the target second cell.

In some embodiments, a field reference control is displayed on a prompt information input interface, and the field reference control is used for setting a reference field in the prompt information; the apparatus 90 further includes a field reference unit (not shown in the figure), and the field reference unit is configured to:
display a reference field setting interface in response to receiving a trigger operation executed on the field reference control; and
set, according to received reference field information input in the reference field setting interface, the reference field indicated by the reference field information for the prompt information.

In some embodiments, the field reference unit is further configured to control the reference field setting interface to move along with the movement of a cursor.

In some embodiments, the field reference unit is further configured to:
display information of the reference field in the prompt information after receiving the reference field information.

In some embodiments, the apparatus 90 further includes a prompt information configuration unit (not shown in the figure), and the prompt information configuration unit is configured to:
display a prompt information input interface in response to receiving a first preset configuration operation executed by a user on the target field of the table; and
generate the prompt information corresponding to the target field according to a prompt information configuration operation received in the prompt information input interface.

In some embodiments, the target field is a new field; and the prompt information configuration unit is further configured to:
receive a trigger operation executed for a prompt information configuration entry displayed on a creation page of the new field, and display the prompt information input interface.

In some embodiments, the target field is an existing field, and the prompt information configuration unit is further configured to:
display a field editing option according to a second preset operation executed for the existing field;
receive a selection operation executed on the field editing option, and display a prompt information configuration entry; and
receive a trigger operation executed on the prompt information configuration entry, and display the prompt information input interface.

In some embodiments, the prompt information configuration unit is further configured to:
use third content input in the prompt information input interface as the prompt information; or
receive fourth content input in a target prompt information template provided by the prompt information input interface, and generate the prompt information according to fifth content provided by the target prompt information template and the fourth content.

In some embodiments, the prompt information configuration unit is further configured to:
display a prompt information template list on the prompt information input interface, and display a target prompt information template content interface according to a selection operation executed by the user on the target prompt information template in the prompt information list, where the target prompt information template content interface includes corresponding fifth content; and
hide the prompt information template list in response to receiving a fourth content editing operation executed by the user on the target prompt information template content interface.

In some embodiments, the prompt information configuration unit is further configured to:
redisplay the prompt information template list in response to detecting that the fourth content is completely deleted.

In order to achieve the above-mentioned embodiments, the embodiments of the present disclosure further provide an electronic device.

Referring to Fig. 10, Fig. 10 illustrates a schematic structural diagram of an electronic device 1000 suitable for implementing the embodiments of the present disclosure, and the electronic device 1000 may be a terminal device or a server. The terminal device may include but is not limited to a mobile terminal such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal), or the like, and a fixed terminal such as a digital TV, a desktop computer, or the like. The electronic device illustrated in Fig. 10 is merely an example, and should not pose any limitation to the functions and the range of use of the embodiments of the present disclosure.

As illustrated in Fig. 10, the electronic device 1000 may include a processing apparatus 1001 (e.g., a central processing unit, a graphics processing unit, etc.), which can perform various suitable actions and processing according to a program stored in a read-only memory (ROM) 1002 or a program loaded from a storage apparatus 1008 into a random-access memory (RAM) 1003. The RAM 1003 further stores various programs and data required for operations of the electronic device 1000. The processing apparatus 1001, the ROM 1002, and the RAM 1003 are interconnected through a bus 1004. An input/output (I/O) interface 1005 is also connected to the bus 1004.

Usually, the following apparatuses may be connected to the I/O interface 1005: an input apparatus 1006 including, for example, a touch screen, a touch pad, a keyboard, a mouse, a camera, a microphone, an accelerometer, a gyroscope, or the like; an output apparatus 1007 including, for example, a liquid crystal display (LCD), a loudspeaker, a vibrator, or the like; a storage apparatus 1008 including, for example, a magnetic tape, a hard disk, or the like; and a communication apparatus 1009. The communication apparatus 1009 may allow the electronic device 1000 to be in wireless or wired communication with other devices to exchange data. While Fig. 10 illustrates the electronic device 1000 having various apparatuses, it should be understood that not all of the illustrated apparatuses are necessarily implemented or included. More or fewer apparatuses may be implemented or included alternatively.

According to the embodiments of the present disclosure, the processes described above with reference to the flowcharts may be implemented as a computer software program. For example, the embodiments of the present disclosure include a computer program product, which includes a computer program carried by a non-transitory computer-readable medium. The computer program includes program code for performing the methods shown in the flowcharts. In such embodiments, the computer program may be downloaded online through the communication apparatus 1009 and installed, or may be installed from the storage apparatus 1008, or may be installed from the ROM 1002. When the computer program is executed by the processing apparatus 1001, the above-mentioned functions defined in the methods of some embodiments of the present disclosure are performed.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program code. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

The above-mentioned computer-readable medium may be included in the above-mentioned electronic device, or may also exist alone without being assembled into the electronic device.

The above-mentioned computer-readable medium carries one or more programs (computer-executable instructions), and when the one or more programs are executed by the electronic device, the electronic device is caused to implement the methods of the above-mentioned embodiments.

The computer program code for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the drawings illustrate the architecture, function, and operation of possible implementations of systems, methods, and computer program products according to various embodiments of the present disclosure. In this regard, each block in the flowcharts or block diagrams may represent a module, a program segment, or a portion of code, including one or more executable instructions for implementing specified logical functions. It should also be noted that, in some alternative implementations, the functions noted in the blocks may also occur out of the order noted in the drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. Among them, the name of the module or unit does not constitute a limitation of the unit itself under certain circumstances.

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

The above descriptions are merely illustrations of the technical principles applied in the embodiments of the present disclosure. Those skilled in the art should understand that the scope of disclosure involved in the present disclosure is not limited to the technical solutions formed by the specific combination of the above-mentioned technical features, and should also cover, without departing from the above-mentioned disclosed concept, other technical solutions formed by any combination of the above-mentioned technical features or their equivalents, such as technical solutions which are formed by replacing the above-mentioned technical features with the technical features disclosed in the present disclosure (but not limited to) with similar functions.

Additionally, although operations are depicted in a particular order, it should not be understood that these operations are required to be performed in a specific order as illustrated or in a sequential order. Under certain circumstances, multitasking and parallel processing may be advantageous. Likewise, although the above discussion includes several specific implementation details, these should not be interpreted as limitations on the scope of the present disclosure. Certain features that are described in the context of separate embodiments may also be implemented in combination in a single embodiment. Conversely, various features that are described in the context of a single embodiment may also be implemented in multiple embodiments separately or in any suitable sub-combinations.

Although the present disclosure has been described in language specific to structural features and/or method logical actions, it should be understood that the subject matter defined in the appended claims is not necessarily limited to the specific features or actions described above. Rather, the specific features and actions described above are merely example forms of implementing the claims.

## Claims

1. A method for generating table field content, comprising:
receiving prompt information input for a target field in a table, wherein the prompt information comprises at least one reference field, and the reference field is a field in the table;
generating, in response to receiving a content generation instruction for the target field, second content of a second cell corresponding to the target field based on first content of a first cell corresponding to the reference field; and
presenting the second content in the second cell corresponding to the target field.

2. The method according to claim 1, wherein the generating, in response to receiving the content generation instruction for the target field, the second content of the second cell corresponding to the target field based on the first content of the first cell corresponding to the reference field, comprises:
generating a content generation request for generating the second content according to the content generation instruction, wherein the content generation request comprises information of first content; and
calling a first model to generate the second content according to the content generation request.

3. The method according to claim 2, wherein the generating the content generation request for generating the second content according to the content generation instruction comprises:
generating content generation requests respectively corresponding to a plurality of second cells corresponding to the target field, wherein a content generation request of each second cell comprises the first content of the corresponding first cell; and
the calling the first model to generate the second content according to the content generation request comprises:
sending the content generation requests respectively corresponding to the plurality of second cells to the first model, and generating the second content corresponding to each second cell by the first model.

4. The method according to claim 3, wherein the sending the content generation requests respectively corresponding to the plurality of second cells to the first model, and generating the second content corresponding to each second cell by the first model, comprises:
sending the content generation requests respectively corresponding to the plurality of second cells to the first model in parallel, and generating the second content corresponding to each second cell by the first model in parallel based on the content generation requests.

5. The method according to any one of claims 2 to 4, further comprising:
in response to receiving a content update instruction for the target field, regenerating the content generation requests of the plurality of second cells corresponding to the target field, and calling the first model to process regenerated content generation requests to generate first updated content of the plurality of second cells; and
updating the second content of second cell with the first updated content.

6. The method according to claim 5, wherein the content update instruction is generated based on one of the following modes:
generating the content update instruction according to a received field content update operation executed by a user on the target field; and
generating the content update instruction in response to meeting an automatic update condition, wherein the automatic update condition comprises one of: timing triggering, adding a new record to the table, changing table recorded content, and reaching a time indicated by a specified record.

7. The method according to any one of claims 2 to 6, further comprising:
in response to receiving a content update instruction for a target second cell of the target field, regenerating a content generation request of the target second cell, and calling the first model to generate second updated content of the target cell according to the regenerated content generation request corresponding to the target second cell by the first model; and
updating second content of the target second cell with the second updated content.

8. The method according to claim 7, wherein the content update instruction for the target second cell of the target field is generated based on the following steps:
displaying, in response to detecting a first preset operation executed by a user on the target second cell, a content update option corresponding to the target second cell; and
generating, in response to receiving a trigger operation executed on the content update option, the content update instruction corresponding to the target second cell.

9. The method according to any one of claims 1 to 8, wherein a field reference control is displayed on a prompt information input interface, and the field reference control is used for setting a reference field in the prompt information; and the method further comprises:
displaying a reference field setting interface in response to receiving a trigger operation executed on the field reference control; and
setting, according to received reference field information input in the reference field setting interface, the reference field indicated by the reference field information for the prompt information.

10. The method according to claim 9, further comprising:
controlling the reference field setting interface to move along with a movement of a cursor.

11. The method according to claim 9 or 10, further comprising:
displaying information of the reference field in the prompt information after receiving the reference field information.

12. The method according to any one of claims 1 to 11, further comprising:
displaying a prompt information input interface in response to receiving a first preset configuration operation executed by a user on the target field of the table; and
generating the prompt information corresponding to the target field according to a prompt information configuration operation received in the prompt information input interface.

13. The method according to claim 12, wherein the target field is a new field; and the displaying the prompt information input interface in response to receiving the first preset configuration operation executed by the user on the target field of the table comprises:
receiving a trigger operation executed for a prompt information configuration entry displayed on a creation page of the new field, and displaying the prompt information input interface.

14. The method according to claim 12, wherein the target field is an existing field; and the displaying the prompt information input interface in response to receiving the first preset configuration operation executed by the user on the target field of the table comprises:
displaying a field editing option according to a second preset operation executed for the existing field;
receiving a selection operation executed on the field editing option, and displaying a prompt information configuration entry; and
receiving a trigger operation executed on the prompt information configuration entry, and displaying the prompt information input interface.

15. The method according to any one of claims 12 to 14, wherein the generating the prompt information corresponding to the target field according to the prompt information configuration operation received in the prompt information input interface comprises:
using third content input in the prompt information input interface as the prompt information; or
receiving fourth content input in a target prompt information template provided by the prompt information input interface, and generating the prompt information according to fifth content provided by the target prompt information template and the fourth content.

16. The method according to claim 15, further comprising:
displaying a prompt information template list on the prompt information input interface, and displaying a target prompt information template content interface according to a selection operation executed by the user on the target prompt information template in the prompt information list, wherein the target prompt information template content interface comprises corresponding fifth content; and
hiding the prompt information template list in response to receiving a fourth content editing operation executed by the user on the target prompt information template content interface.

17. The method according to claim 16, further comprising:
redisplaying the prompt information template list in response to detecting that the fourth content is completely deleted.

18. An apparatus for generating table field content, comprising:
a receiving unit, configured to receive prompt information input for a target field in a table, wherein the prompt information comprises at least one reference field, and the reference field is a field in the table;
a first generation unit, configured to generate, in response to receiving a content generation instruction for the target field, second content of a second cell corresponding to the target field based on first content of a first cell corresponding to the reference field; and
a display unit, configured to present the second content in the second cell corresponding to the target field.

19. An electronic device, comprising a processor and a memory,
wherein the memory is configured to store computer-executable instructions; and
the processor is configured to execute the computer-executable instructions stored in the memory, to implement the method for generating table field content according to any one of claims 1 to 17.

20. A computer-readable storage medium, storing computer-executable instructions, wherein the computer-executable instructions, when executed by a processor, implement the method for generating table field content according to any one of claims 1 to 17.
